# EUROPÄISCHE PATENTSCHRIFT

(11) **EP 4 126 719 B1**
(45) Veröffentlichungstag und Bekanntmachung des Hinweises auf die Patenterteilung: **31.01.2024**
(21) Anmeldenummer: 21713874.2
(22) Anmeldetag: 11.03.2021
(51) Int. Cl.: B65G 47/38, B65G 47/96, B65G 47/84

(54) **VERFAHREN ZUM SORTIEREN VON ARTIKELN UND SORTIERVORRICHTUNG**
METHOD FOR SORTING ARTICLES, AND SORTING DEVICE
PROCÉDÉ POUR TRIER DES ARTICLES ET DISPOSITIF DE TRI

(30) Priorität: 31.03.2020 AT 502612020
(43) Veröffentlichungstag der Anmeldung: 08.02.2023
(73) Patentinhaber: Knapp AG, 8075 Hart bei Graz (AT)
(72) Erfinder: SÜSS, Heiko, 8075 Hart bei Graz (AT); PÜRSCHL, Bernhard, 8075 Hart bei Graz (AT); PENDL, Marc, 8075 Hart bei Graz (AT); MESS, Paul, 48599 Gronau (DE); MATHI, Franz, 8075 Hart bei Graz (AT)
(74) Vertreter: Schwarz & Partner Patentanwälte GmbH
(86) Internationale Anmeldenummer: PCT/AT2021/060086
(87) Internationale Veröffentlichungsnummer: WO 2021/195679

(56) Entgegenhaltungen:
- EP-A1- 1 505 015
- EP-A1- 2 389 330
- US-A1- 2010 320 062

## Beschreibung

Die Erfindung betrifft eine Sortiervorrichtung zum Sortieren von Artikeln an Abgabestellen, gemäß dem Oberbegriff von Anspruch 1.

Weiters betrifft die Erfindung ein Verfahren zum Sortieren von Artikeln an jeweils bestimmte Abgabestellen mit einer derartigen Sortiervorrichtung.

### Stand der Technik

Seit vielen Jahren sind klassische Sortier-Technologien am Markt etabliert, wie zum Beispiel Quergurt-, Push-/Shoe- oder Split-Sorter für Liegewaren oder auch Hängewarensorter. Je nach Beschaffenheit der zu sortierenden Artikel (Größe, Gewicht, etc.), gibt es passende Lösungen, um den jeweiligen Anforderungen des Marktes gerecht zu werden.

Aufgrund der sich derzeit ändernden Anforderungen - unterschiedliche Artikel wie Briefe, Pakete, Trays, lose Waren, etc. innerhalb eines Warenstroms, wie dies im E-Commerce Geschäft notwendig ist, ist es nicht mehr möglich mit einer klassischen Lösung das gesamte Artikelspektrum optimal zu sortieren.

Schwere und/oder große Artikel müssen z.B. mit einer Technologie sortiert werden, indem sie horizontal bzw. lateral abgeschoben werden, wie dies Quergurt- oder Shoe-Sorter ermöglichen. Bei leichten und/oder kleinen Artikeln ist jedoch eine Taschen- oder Splittray-Sortierung sinnvoller, bei denen die Abgabe vertikal/fallend erfolgen kann.

Aus dem Stand der Technik (US 5,217,105 A) ist beispielsweise eine Sortiervorrichtung bekannt, bei welcher mittels Schubelementen Artikel von einer Hauptfördervorrichtung auf eine Nebenfördervorrichtung bewegt werden. Dabei werden die Artikel über Schiebelemente, welche in Richtung der zweiten Förderstrecke verschiebbar sind, bewegt.

Ebenso sind horizontal bzw. lateral abschiebende "Push-Sorter" (EP 2 159 174 A1, US 2016/0325315 A1) und "Shoe-Sorter" (US 2006/0060447 A1) aus dem Stand der Technik bekannt.

Sogenannte "Split-Tray-Sorter", welche eine vertikale (fallende) Abgabe der Artikel ermöglichen, sind beispielsweise aus der CN 110155680 A bekannt.

Daneben sind aus dem Stand der Technik (US 6,762,382 B, DE 10 2014 119 110 A1) Sortiervorrichtungen gemäß dem Oberbegriff des Anspruchs 1 bekannt, welche zur vertikalen Abgabe von Artikeln von einer Transportplattform an eine darunterliegende Abgabestelle ausgebildet sind.

Zudem sind aus dem Stand der Technik (DE 199 59 843 A1, WO 2016/056911 A2, WO 2015/174843 A1) Sortiervorrichtungen bekannt, die zur lateralen Abgabe von Artikeln, durch Abschieben von einer Transportplattform mithilfe eines Schiebers, ausgebildet sind.

Die EP 1 505 015 A1 offenbart eine gattungsgemäße Sortiervorrichtung für Produkte, welche in einer Transportrichtung transportiert werden, wobei die Sortiervorrichtung eine Fördervorrichtung umfasst, welche einen endlosen Förderpfad aufweist.

Die EP 2 389 330 A1 offenbart ein Fördersystem zur Förderung von Verpackungsschalen für Lebensmittelprodukte von einer oder mehreren Importstationen zu einer oder mehreren Exportstationen.

Der Nachteil dieser bekannten Sortiervorrichtungen bzw. -verfahren ist es, dass diese jeweils auf eine möglichst schnelle Sortierung an bestimmte Endstellen mit maximalem Durchsatz für ein bestimmtes Artikelspektrum ausgelegt sind. Solche Sortiervorrichtungen können aber nur sehr begrenzt mit wechselnden Artikelspektren umgehen, bzw. sind gar nicht geeignet bestimmte Artikel zu sortieren. So können diese nicht zugleich artikelschonend schwere und leichte oder große und kleine Artikel abgeben, wofür zur Sortierung eines breiten Artikelspektrums üblicherweise mehrere Sortiervorrichtungen vorgesehen werden müssen, was einen hohen Kostenaufwand verursacht.

### Offenbarung der Erfindung

Aufgabe der vorliegenden Erfindung ist es daher eine Sortiervorrichtung der eingangs erwähnten Art bereitzustellen, welche die Nachteile des Stands der Technik überwindet und eine zuverlässige und schonende gemeinsame Sortierung von Artikeln mit unterschiedlichen Transport- und Abgabeanforderungen gewährleistet.

Die Erfindung löst die gestellte Aufgabe der Erfindung hinsichtlich der Sortiervorrichtung durch die Bereitstellung einer Sortiervorrichtung mit den Merkmalen von Anspruch 1.

Weist zumindest eine Transportplattform der Sortiervorrichtung eine zweite Abgabeeinrichtung zum lateralen Abgeben der Artikel von der Auflagefläche an zumindest eine zweite Abgabestelle auf, so kann neben der vertikalen Fallbewegung durch die erste Abgabeeinrichtung zur Abgabe der Artikel an die erste Abgabestelle eine zweite Abgabeeinrichtung bereitgestellt werden, welche eine schonende Sortierung der Artikel ohne Fallbewegung ermöglicht. Dies kann etwa bei der Sortierung von zerbrechlichen, sehr schweren oder sehr sperrigen Artikeln von Vorteil sein, welche entweder nicht geworfen werden dürfen oder eine hohe Belastung für die mechanischen Bauteile der Sortiervorrichtung darstellen würden. Durch die erfindungsgemäße Sortiervorrichtung muss allerdings nicht auf die kostengünstigen und schnellen vertikalen Abgabeeinrichtungen verzichtet werden. Diese können vielmehr parallel neben lateral ausgebenden Abgabeeinrichtungen eingesetzt werden und so eine besonders kostengünstige Sortiervorrichtung zur zuverlässigen und schonenden gemeinsamen Sortierung einer Vielzahl von Artikeln ermöglichen.

Unter "Artikel" im Sinne der vorliegenden Erfindung werden sowohl Einzelartikel, als auch Überverpackungen und Ladehilfsmittel mit mehreren Einzelartikeln verstanden. Einzelartikel können dabei beispielsweise Briefe, Pakete, Produkte, etc., sein, während Überverpackungen Behältnisse, beispielsweise Kartons, Kisten, etc., zur Aufnahme von mehreren solchen Einzelartikeln sind. Ladehilfsmittel können ebenso Behältnisse für mehrere Einzelartikel sein, welche über zusätzliche Funktionen verfügen, wie etwa Kippschalen, Sortierschalen und dergleichen.

Unter "lateral" werden im Zusammenhang mit der vorliegenden Erfindung jeweils jene Richtungen verstanden, welche am jeweiligen Punkt der Fördereinrichtung quer zu deren Transportrichtung und im Wesentlichen orthogonal zur vertikalen Richtung sind.

Die erste Abgabeeinrichtung kann konstruktiv einfach ausgeführt werden, wenn diese als Fallklappe mit zumindest einer um eine horizontale Achse drehbaren Klappe zum vertikalen Abwerfen der Artikel an die Abgabestelle ausgebildet ist. Die eine oder mehreren Klappen können dabei reversibel von einer geschlossenen Stellung in eine geöffnete Stellung verschwenkbar sein und in der geschlossenen Stellung die Auflagefläche der Transportplattform ausbilden.

Die Fallklappe kann dabei durch eine beliebige Anordnung von drehbaren Klappen gebildet werden. Bevorzugt sind die Drehachsen der Klappen an Rändern der Transportplattformen gelagert.

Die Fallklappe kann in einer Ausführungsvariante durch eine am Rand der Transportplattform gelagerte Klappe gebildet sein, welche die Auflagefläche ausbildet.

In einer weiteren Ausführungsvariante kann die Fallklappe wiederum zwei an jeweils gegenüberliegenden Rändern der Transportplattform gelagerte Klappen aufweisen, welche im geschlossenen Zustand in der Mitte der Transportplattform zusammentreffen und gemeinsam die Auflagefläche ausbilden.

Ebenso kann in einer weiteren Ausführungsvariante die Fallklappe aus mehreren nebeneinander angeordneten und an den Rändern der Transportplattform gelagerten Klappen gebildet sein, welche unabhängig voneinander zum vertikalen Abwerfen der Artikel verschwenkbar sind.

Die Fallklappe kann dabei beispielsweise eine pneumatisch auslösbare mechanische Verriegelung aufweisen. In einer weiteren Ausführungsvariante kann die Fallklappe auch eine elektrisch, magnetisch oder mechanisch auslösbare Verriegelung aufweisen. Durch Auslösung der Verriegelung können die Klappen automatisch, beispielsweise aufgrund der Schwerkraft, in die geöffnete Stellung verschwenkt werden und somit den auf der Auflagefläche liegenden Artikel durch die Fallklappe vertikal abwerfen.

Die zweite Abgabeeinrichtung kann für eine besonders schonende Abgabe der Artikel als Schieber zum lateralen Abschieben der Artikel an die zweite Abgabestelle ausgebildet sein.

Weist der Schieber ein Schiebeelement auf, welches zwischen einer Ruheposition und einer Abschiebeposition entlang der Auflagefläche quer zur Transportrichtung verschiebbar ist, so kann eine Abgabe der Artikel an die zweite Abgabestelle zuverlässig auf technisch einfache Weise durch Verschieben des Schiebeelements erfolgen.

Das Schiebeelement kann dabei von einer Ruheposition, in welcher die Artikel auf der Auflagefläche der Transportplattform aufliegen und transportiert werden, in eine Auswurfposition, in welcher die Artikel durch das Schiebeelement quer zur Transportrichtung von der Auflagefläche abgeschoben werden, verschoben werden.

In einer Ausführungsvariante der Erfindung kann die Ruheposition des Schiebeelements an einem Rand der Transportplattform bzw. der Auflagefläche angeordnet sein, so dass die auf der Auflagefläche aufliegenden Artikel zur jeweils anderen Seite der Transportplattform hin abgeschoben werden.

Bildet das Schiebeelement in seiner Ruheposition einen Trennsteg auf der Auflagefläche aus, so kann die Auflagefläche der Transporteinrichtung technisch einfach in einen ersten und zweiten Auflagebereich auf jeweils einer Seite des Trennstegs unterteilt werden. Die parallele Beförderung von mehreren Artikeln in getrennten Auflagebereichen auf der Transportplattform wird hiermit ermöglicht.

Die Ruheposition des Schiebeelements und somit der Trennsteg kann dabei in der Mitte der Transportplattform bzw. der Auflagefläche oder aber auch außerhalb der Mitte z.B. 1/3 zu 2/3 oder 1/4 zu 3/4 angeordnet sein. Das Schiebeelement kann somit an beiden quer zur Transportrichtung gegenüberliegenden Rändern der Transportplattform je eine Auswurfposition aufweisen. Dabei können Artikel auf der Auflagefläche beiderseits des Trennstegs jeweils in dem ersten oder zweiten Auflagebereich aufliegen und das Schiebeelement zum Abschieben der Artikel von dem ersten oder zweiten Auflagebereich an die jeweilige Auswurfposition verschoben werden.

In einer weiteren Ausführungsvariante kann auf der Auflagefläche ein Trennsteg vorgesehen sein, welcher die Auflagefläche in einen ersten und zweiten Auflagebereich auf jeweils einer Seite des Trennstegs unterteilt. Dabei kann jeweils auf beiden Seiten des Trennstegs ein Schieber und eine Fallklappe vorgesehen sein, welche insbesondere unabhängig voneinander betätigt werden können. In einer weiteren Variante kann auch nur in dem ersten Auflagebereich ein Schieber vorgesehen sein und in dem zweiten Auflagebereich nur eine Fallklappe.

In einer noch weiteren Variante kann die Auflagefläche auch ohne Trennsteg gemäß obiger Beschreibung in einen ersten und zweiten Auflagebereich unterteilt sein.

Eine technisch einfache Sortiervorrichtung kann geschaffen werden, wenn das Schiebeelement zum Verschieben entlang der Auflagefläche mit zumindest einem an einem Rand der Transportplattform vorgesehenen Zugmittel gekoppelt ist.

Bevorzugt kann das Schiebeelement dabei zum Verschieben entlang der Auflagefläche mit zwei an gegenüberliegenden Rändern der Transportplattform vorgesehenen und parallel angetriebenen Zugmitteln gekoppelt sein. Die Zugmittel können dabei weiters bevorzugt an den in Transportrichtung der Fördereinrichtung liegenden Rändern der Transportplattform angeordnet sein, so dass ein Verschieben des Schiebeelements quer zur Transportrichtung ermöglicht wird.

In einer bevorzugten Ausführungsvariante der Erfindung ist das Zugmittel unterhalb der Transportplattform angeordnet, so dass die Auflageflächen in der Fördereinrichtung benachbarter Transportplattformen, insbesondere ohne Erhebungen, eben zueinander angeordnet sind. Der Transport übergroßer Artikel, welche sich über mehrere benachbarte Transportplattformen erstrecken, wird hierdurch ermöglicht. Ein horizontales Abgeben der Artikel an eine Abgabestelle kann dabei durch das gleichzeitige Verschieben mehrerer Schiebelemente in deren Auswurfposition erfolgen.

Bevorzugt ist das Zugmittel konstruktiv einfach als angetriebener Riemen oder angetriebene Kette ausgeführt. Ein solcher Riemen bzw. eine solche Kette kann etwa durch einen Motor, durch einen Reibradantrieb oder durch vergleichbare Antriebsvorrichtungen angetrieben werden, um das Schiebelement zu verschieben.

In einer weiteren Ausführungsvariante der Erfindung ist das Schiebeelement zum Verschieben entlang der Auflagefläche mit zumindest einer an einem Rand der Transportplattform vorgesehenen Spindel gekoppelt. Eine solche Spindel kann beispielsweise Teil eines Kugelgewindetriebs, eines Rollengewindetriebs, eines Planetenrollengewindetriebs, eines Trapezgewindetriebs, eines Steilgewindetriebs oder dergleichen, mit entsprechender Ausgestaltung der Spindel sein.

In weiteren Ausführungsvarianten der Erfindung kann das Schiebelement zum Verschieben entlang der Auflagefläche alternative Linearantriebe, wie etwa Linearmotoren, Pneumatikzylinder, Hydraulikzylinder, Zahnstangenantriebe, etc., aufweisen.

In einer weiteren Ausführungsvariante kann die zweite Abgabeeinrichtung als Kippschale zum lateralen Abgeben der Artikel an die zweite Abgabestelle ausgebildet sein.

In einer Variante kann die Kippschale etwa als kippbare Fallklappe in der Transportplattform ausgebildet sein. In einer weiteren Variante kann die Kippschale eigenständig abgebbar auf der Transportplattform vorgesehen sein.

Erfindungsgemäß umfasst die Sortiervorrichtung zumindest eine Transportplattform einer ersten Art, wobei die Transportplattform der ersten Art zugleich die erste Abgabeeinrichtung zum vertikalen Abgeben der Artikel und die zweite Abgabeeinrichtung zum lateralen Abgeben der Artikel aufweist. So kann eine besonders vielseitige und kosteneffiziente Sortiervorrichtung bereitgestellt werden. Eine solche "kombinierte" Transportplattform der ersten Art ermöglicht erfindungsgemäß eine gleichzeitige Sortierung von Artikeln verschiedener Eigenschaften (Größe, Gewicht, Zerbrechlichkeit, etc.). So können beispielsweise kleine robuste Artikel und große sperrige bzw. zerbrechliche Artikel mit der erfindungsgemäßen Sortiervorrichtung auf Transportplattformen der ersten Art transportiert werden und jeweils in Abhängigkeit der Eigenschaften der Artikel entweder vertikal oder lateral an Abgabeeinrichtungen abgegeben werden.

Umfasst die Sortiervorrichtung zumindest eine Transportplattform einer zweiten Art und zumindest eine Transportplattform einer dritten Art, wobei die Transportplattform der zweiten Art nur die erste Abgabeeinrichtung zum vertikalen Abgeben der Artikel aufweist und die Transportplattform der dritten Art nur die zweite Abgabeeinrichtung zum lateralen Abgeben der Artikel aufweist, so kann eine besonders kostengünstige und technisch einfache Sortiervorrichtung geschaffen werden. Die Transportplattformen der zweiten Art und der dritten Art können sich dabei beispielsweise in der Fördereinrichtung abwechseln, wodurch wiederum Artikel verschiedener Eigenschaften (wie zuvor beschrieben) auf der jeweiligen Transportplattform abgelegt werden können, um wahlweise vertikal oder lateral an Abgabeeinrichtungen abgegeben zu werden.

Die Fördereinrichtung kann in der erfindungsgemäßen Sortiervorrichtung eine geschlossene Kette aneinander angrenzender Transportbehältnisse aufweisen, welche entlang einer im Wesentlichen kreisförmigen Bahn geführt werden. Eine solche im Wesentlichen kreisförmige Bahn kann etwa eine ovale Bahn sein, welche aus mit Rundungen verbundenen geraden Abschnitten besteht.

In einer Ausführungsvariante der Erfindung kann dies eine geschlossene Kette aneinander angrenzender Transportplattformen der ersten Art sein.

In einer weiteren Ausführungsvariante der Erfindung kann dies eine geschlossene Kette aneinander angrenzender Transportplattformen sein, in welcher sich Transportplattformen der ersten und/oder zweiten und/oder dritten Art abwechseln.

Die Abgabestellen der Sortiervorrichtung, in welche die Artikel durch die Abgabeeinrichtungen vertikal oder lateral abgegeben werden, können nachgelagerte sekundäre Fördereinrichtungen aufweisen, um die Artikel an Endstellen zuzuführen. Die sekundären Fördereinrichtungen können dabei beispielsweise Förderrutschen oder Förderbänder sein. Die Behältnisse, an welche die Artikel zugeführt werden, können dabei starre Behälter, wie etwa Kisten, Boxen, Körbe, oder dergleichen, oder flexible Behältnisse, wie etwa Säcke, Beutel, etc., sein.

In einer Ausführungsvariante können die ersten und zweiten Abgabestellen durch sekundäre Fördereinrichtungen mit derselben Endstelle verbunden sein, so dass Artikel unterschiedlicher Kategorien entsprechend mittels der ersten oder zweiten Abgabeeinrichtung an die Abgabestellen ausgegeben werden, jedoch an einer Endstelle gemeinsam zusammengeführt werden. Hierdurch können beispielsweise leichte und robuste Artikel über die erste Abgabeeinrichtung vertikal direkt in eine Kiste abgeworfen werden und schwere oder zerbrechliche Artikel über die zweite Abgabeeinrichtung lateral über eine Förderrutsche in diese Kiste rutschen, um diese unterschiedlichen Artikelarten in diese Kiste zu sortieren.

Die Erfindung hat sich weiters die Aufgabe gestellt, ein Verfahren der eingangs erwähnten Art dahingehend zu verbessern, dass Artikel unterschiedlicher Kategorien zuverlässig und schonend sortiert werden können
Die Erfindung löst die gestellte Aufgabe hinsichtlich des Verfahrens durch die Bereitstellung eines Verfahrens mit den Merkmalen von Anspruch 11.

Wird den Artikeln ein sie kennzeichnender Parameter zugeordnet, und werden die Artikel jeweils in Abhängigkeit des Parameters wahlweise lateral oder vertikal an die jeweilige Abgabestelle abgegeben, so kann ein kostengünstiges Sortierverfahren geschaffen werden, welches eine zuverlässige Sortierung von Artikeln verschiedener Kategorien und Eigenschaften ermöglicht. So können die Artikel durch sie kennzeichnende Parameter unterschieden werden und entsprechend dem Parameter unterschiedlich behandelt werden. Insbesondere wird dabei in Abhängigkeit des Parameters entschieden, ob der Artikel lateral oder vertikal an die jeweilige Abgabestelle abgegeben wird.

Während ein vertikales Abgeben eine schnellere und effizientere Sortierung der Artikel ermöglicht, jedoch allerdings auf kleine, leichte bzw. unkritische Artikel limitiert werden sollte, so kann ein laterales Abgeben ein größeres Artikelspektrum schonender verarbeiten. Damit kann vermieden werden, dass die gesamte Sortierung durch das langsamere und technisch aufwändigere laterale Abgeben erfolgen muss, bzw. dass separate Sortiervorrichtungen für die unterschiedlichen Kategorien von Artikeln vorgesehen werden müssen.

Erfindungsgemäß können die Artikel auf Transportplattformen einer ersten Art zum wahlweise lateralen oder vertikalen Abgeben aus der jeweiligen Transportplattform an die jeweilige Abgabestelle abgelegt werden. Ein besonders effizientes Verfahren kann so geschaffen werden, da die Artikel durch jede Transportplattform der ersten Art in Abhängigkeit des Parameters wahlweise lateral oder vertikal abgegeben werden können. Ein Artikel wird somit zunächst auf einer beliebigen Transportplattform der ersten Art abgelegt und kann dann später abhängig vom Parameter lateral oder vertikal abgegeben werden.

In einer weiteren Ausführungsvariante des Verfahrens können die Artikel jeweils in Abhängigkeit des Parameters auf Transportplattformen einer zweiten Art zum vertikalen Abgeben oder auf Transportplattformen einer dritten Art zum lateralen Abgeben der Artikel an die jeweilige Abgabestelle abgelegt werden. So können die Transportplattformen der zweiten und dritten Art beispielsweise abwechselnd in der Fördereinrichtung vorgesehen sein. Abhängig vom Parameter wird ein Artikel dann entweder auf einer Transportplattform der zweiten Art abgelegt und somit später vertikal an die Abgabestelle abgegeben, oder auf einer Transportplattform der dritten Art abgelegt und somit später lateral an die Abgabestelle abgegeben.

Das laterale Abgeben der Artikel von Transportplattformen der ersten oder dritten Art kann vorzugsweise durch Ausschieben mittels eines Schiebers erfolgen.

Das vertikale Abgeben der Artikel von Transportplattformen der ersten oder zweiten Art wiederum kann vorzugsweise durch Abwerfen durch eine Fallklappe aus den Transportplattformen erfolgen.

Der zumindest eine, die jeweiligen Artikel kennzeichnende und ihnen zugeordnete Parameter kann vorzugsweise die Zerbrechlichkeit, die Größe, die Form und/oder das Gewicht des Artikels sein. Das vertikale Abgeben bzw. Werfen von zerbrechlichen, sehr großen oder sehr schweren Artikeln kann insbesondere sehr nachteilig für die Artikel sein oder zu einem erhöhten Verschleiß der mechanischen Komponenten der Sortiervorrichtung führen.

### Kurzbeschreibung der Figuren

Im Folgenden werden bevorzugte Ausführungsvarianten der Erfindung anhand der Figuren näher dargestellt. Es zeigen:
- Fig. 1: eine schematische Ansicht der Sortiervorrichtung und des Sortierverfahrens gemäß einer ersten Ausführungsvariante,
- Fig. 2: eine schematische Ansicht der Sortiervorrichtung und des Sortierverfahrens gemäß einer zweiten Ausführungsvariante,
- Fig. 3: schematische Ansichten einer Transportplattform gemäß der ersten Ausführungsvariante der Sortiervorrichtung, und
- Fig. 4: schematische Ansichten einer Transportplattform gemäß der zweiten Ausführungsvariante der Sortiervorrichtung.

### Wege zur Ausführung der Erfindung

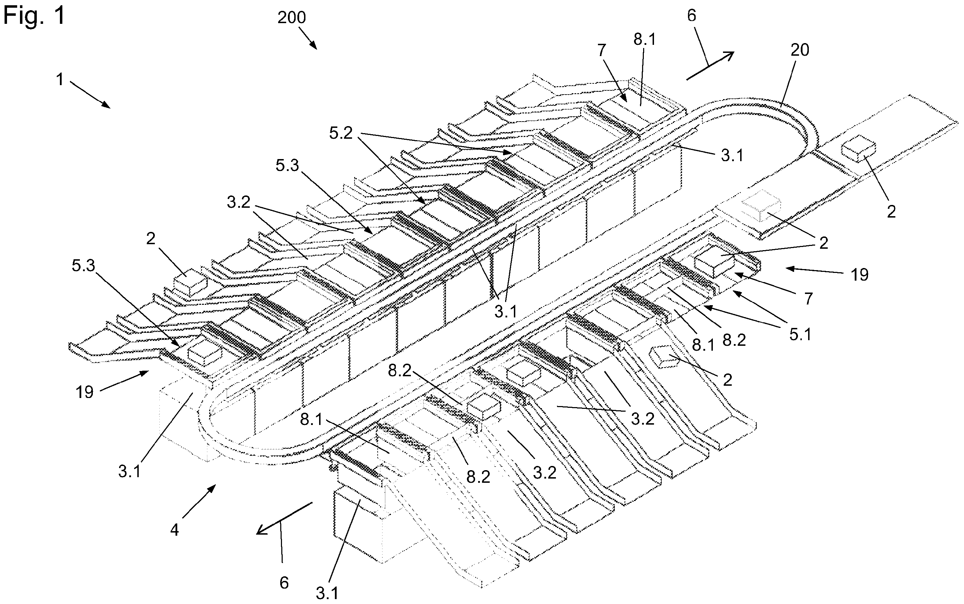

Fig. 1 zeigt eine Sortiervorrichtung 1 gemäß einer ersten Ausführungsvariante der Erfindung zum Sortieren von Artikeln 2 an verschiedene Abgabestellen 3.1, 3.2. Die Sortiervorrichtung 1 weist dazu eine Fördereinrichtung 4 mit Transportplattformen 5.1, 5.2, 5.3 auf, wobei die Transportplattformen 5.1, 5.2, 5.3 entlang der Transportrichtung 6 auf der Fördereinrichtung 4 bewegbar sind. Die Transportplattformen 5.1, 5.2, 5.3 sind dabei zum Transport und zum Abgeben der Artikel 2 an die Abgabestellen 3.1, 3.2 ausgebildet. Dazu weisen die Transportplattformen 5.1, 5.2, 5.3 Auflageflächen 7 für die Artikel 2 auf, auf denen die Artikel 2 während des Transports zu den Abgabestellen 3.1, 3.2 aufliegen.

Erfindungsgemäß weist zumindest eine der Transportplattformen 5.1, 5.2 eine erste Abgabeeinrichtung 8.1 auf, welche zum vertikalen Abgeben der Artikel 2 von der jeweiligen Auflagefläche 7 der Transportplattform 5.1, 5.2 an eine erste Abgabestelle 3.1 ausgebildet ist. Zudem weist zumindest eine der Transportplattformen 5.1, 5.3 eine zweite Abgabeeinrichtung 8.2 auf, welche zum lateralen Abgeben der Artikel 2 von der jeweiligen Auflagefläche 7 der Transportplattform 5.1, 5.3 an eine zweite Abgabestelle 3.2 ausgebildet ist.

Die erste und zweite Abgabestelle 3.1, 3.2 können auch weiters über sekundäre Fördereinrichtungen, wie etwa Förderrutschen, Förderbänder oder dergleichen, mit Endstellen verbunden sein, wobei die erste und zweite Abgabestelle 3.1, 3.2 auch mit jeweils derselben Endstelle verbunden sein können. Dies wurde in den Figuren durch die mit den zweiten Abgabestellen 3.2 verbundenen Förderrutschen und die unter den ersten Abgabestellen 3.1 angeordneten Endstellen nur angedeutet.

In der in Fig. 1 gezeigten Ausführungsvariante sind in der Sortiervorrichtung 1 Transportplattformen 5.1 einer ersten Art vorgesehen, welche sowohl die erste Abgabeeinrichtung 8.1, als auch die zweite Abgabeeinrichtung 8.2 aufweisen. Weiters sind auch Transportplattformen 5.2 einer zweiten Art und Transportplattformen 5.3 einer dritten Art vorgesehen, wobei die Transportplattformen 5.2 der zweiten Art lediglich die erste Abgabeeinrichtung 8.1 und die Transportplattformen 5.3 der dritten Art lediglich die zweite Abgabeeinrichtung 8.2 aufweisen.

In einer weiteren, in den Figuren nicht näher dargestellten Ausführungsvariante weist die Sortiervorrichtung 1 ausschließlich Transportplattformen 5.1 der ersten Art auf.

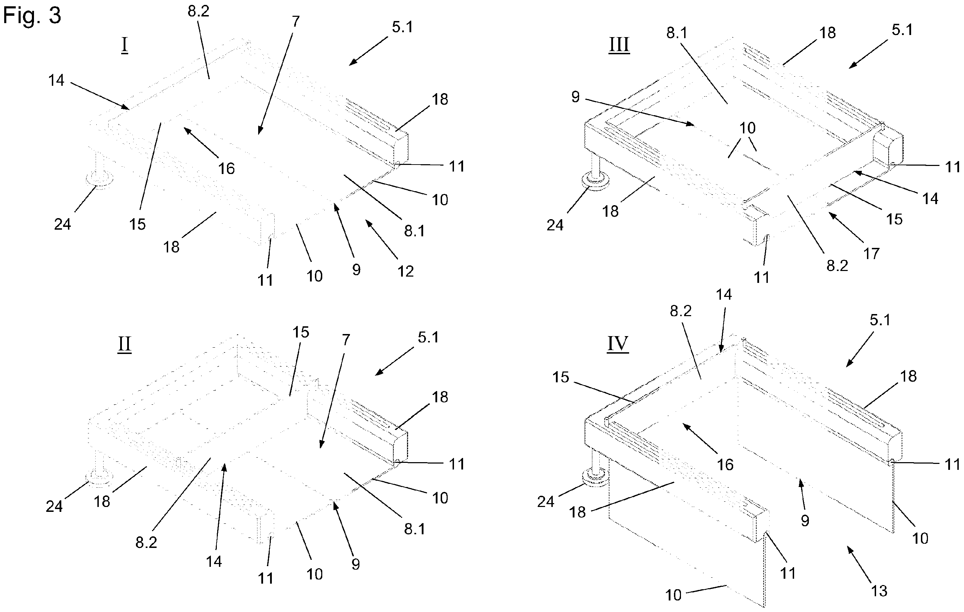

In Fig. 3 ist eine schematische Detailansicht einer Transportplattform 5.1 der ersten Art gezeigt, welche sowohl die erste Abgabeeinrichtung 8.1 als auch die zweite Abgabeeinrichtung 8.2 aufweist.

Die erste Abgabeeinrichtung 8.1 ist dabei in der in Fig. 3 gezeigten Ausführungsvariante als Fallklappe 9 mit zwei um jeweils horizontale Achsen 11 drehbare Klappen 10 zum vertikalen Abwerfen der Artikel 2 an eine darunterliegende erste Abgabestelle 3.1 ausgebildet. Die Klappen 10 sind dabei reversibel von einer geschlossenen Stellung 12 in eine geöffnete Stellung 13 verschwenkbar. In der geschlossenen Stellung 12 bilden die Klappen 10 die Auflagefläche 7 der Transportplattform 5.1 aus.

Die zweite Abgabeeinrichtung 8.2 ist in der in Fig. 3 gezeigten Ausführungsvariante als Schieber 14 zum lateralen Abschieben der Artikel 2 an eine seitlich zur Fördereinrichtung 4 angeordnete zweite Abgabestelle 3.2 ausgebildet. Der Schieber 14 weist ein Schiebeelement 15 auf, welches zwischen einer Ruheposition 16 und einer Abschiebeposition 17 entlang der Auflagefläche 7 quer zur Transportrichtung 6 verschiebbar ist. Dazu ist das Schiebeelement mit zwei an gegenüberliegenden Rändern 18 der Transportplattform 5.1 vorgesehenen und parallel angetriebenen Zugmitteln gekoppelt, was in den Figuren jedoch nicht näher dargestellt wurde.

In gegenständlicher Ausführungsvariante sind die Zugmittel Riemen, welche durch ein Antriebsmittel 24, beispielsweise ein Reibrad oder ein Motor, angetrieben werden.

Fig. 3 zeigt die Transportplattform 5.1 in vier verschiedenen Zuständen I, II, III und IV.

Im Zustand I ist die Transportplattform 5.1 bereit Artikel 2 aufzunehmen und diese zu einer Abgabestelle 3.1, 3.2 zu transportieren. Die Fallklappe 9 ist dabei in der geschlossenen Stellung 12, die Klappen 10 bilden also die Auflagefläche 7 aus. Der Schieber 14 ist nicht betätigt und das Schiebelement 15 ist in seiner Ruheposition 16.

Im Zustand II wird der Schieber 14 der Transportplattform 5.1 als zweite Abgabeeinrichtung 8.2 betätigt, um den auf der Auflagefläche 7 befindlichen Artikel 2 (nicht dargestellt) an eine zweite Abgabestelle 3.2 lateral abzuschieben. Das Schiebelement 15 befindet sich dabei in einer mittleren Position, um den Artikel 2 zu erfassen und entlang der Auflagefläche 7 abzuschieben.

Im Zustand III wurde der Schieber 14 vollständig betätigt und der Artikel 2 von der Auflagefläche 7 an die zweite Abgabestelle 3.2 lateral abgeschoben. Das Schiebelement 15 befindet dazu also in der Abschiebeposition 17.

Im Zustand IV ist der Schieber 14 mit dem Schiebelement 15 in der Ruheposition 16, allerdings wurde die Fallklappe 9 als erste Abgabeeinrichtung 8.1 betätigt, um den auf der Auflagefläche 7 befindlichen Artikel 2 an eine erste Abgabestelle 3.1 vertikal abzuwerfen. Die Klappen 10 der Fallklappe 9 sind dazu in ihre geöffnete Stellung 13 verschwenkt, wodurch der Artikel 2 vertikal nach unten abgegeben werden kann.

Die Transportplattformen 5.1 sind ebenso in Fig. 1 in der Sortiervorrichtung 1 entsprechend der in Fig. 3 gezeigten Zustände I, II, III und IV dargestellt.

Die Fördereinrichtung 4 der Sortiervorrichtung 1, entsprechend der Ausführungsvariante in Fig. 1, ist als Kette 19 aneinander angrenzender Transportplattformen 5.1, 5.2, 5.3 ausgebildet, welche entlang einer im Wesentlichen kreisförmigen Bahn 20 geführt werden.

Die kreisförmige Bahn 20 kann dabei in einer weiteren Ausführungsvariante in horizontaler und vertikaler Ebene geführt werden, so dass die Transportplattformen 5.1, 5.2, 5.3 vertikal über oder unter den Transportplattformen 5.1, 5.2, 5.3 in Gegenrichtung zur Transportrichtung 6 zurückgeführt werden.

In einer weiteren Ausführungsvariante kann die Fördereinrichtung auch als geschlossene Kette 19 aneinander angrenzender Transportplattformen 5.1, 5.2, 5.3 ausgebildet sein, was in den Figuren jedoch nicht näher dargestellt wurde.

Gemäß Fig. 1 ist auch ein Verfahren 200 zum Sortieren von Artikeln 2 gezeigt. Dabei werden die Artikel 2 auf den Transportplattformen 5.1, 5.2, 5.3 der Fördereinrichtung 4 abgelegt und mittels der Fördereinrichtung 4 auf den Transportplattformen 5.1, 5.2, 5.3 zu jeweils bestimmten Abgabestellen 3.1, 3.2 transportiert und an diese abgegeben.

Den Artikeln 2 ist dabei jeweils ein sie kennzeichnender Parameter zugeordnet. Ein solcher Parameter kann beispielsweise die Zerbrechlichkeit, die Größe und/oder das Gewicht des Artikels 2 sein. Die Artikel 2 werden dann erfindungsgemäß jeweils in Abhängigkeit des Parameters entweder vertikal durch die erste Abgabeeinrichtung 8.1 oder lateral durch die zweite Abgabeeinrichtung 8.2 an die jeweilige Abgabestelle 3.1, 3.2 abgegeben.

Wie in Fig. 1 dargestellt, können die Artikel 2 hierzu auf Transportplattformen 5.1 der ersten Art abgelegt werden. Da die Transportplattformen 5.1 der ersten Art sowohl eine erste Abgabeeinrichtung 8.1 als auch eine zweite Abgabeeinrichtung 8.2 aufweist, können die Artikel 2 einfach nach erfolgtem Transport zu der bestimmten Abgabestelle 3.1, 3.2 in Abhängigkeit ihres Parameters vertikal oder lateral abgegeben werden.

Weiters können die Artikel 2 auch wahlweise beim Ablegen auf den Transportplattformen 5.1, 5.2, 5.3 in Abhängigkeit ihres Parameters auf Transportplattformen 5.2 der zweiten Art oder Transportplattformen 5.3 der dritten Art abgelegt werden. So kann beispielsweise ein Artikel 2, der aufgrund seines ihm zugeordneten Parameters vertikal abgegeben werden muss, auf einer Transportplattform 5.2 der zweiten Art abgelegt werden, welche über eine erste Abgabeeinrichtung 8.1 zum vertikalen Abgeben verfügt. Auf der anderen Seite können Artikel 2, die lateral abgegeben werden müssen beispielswiese, weil diese schwer oder zerbrechlich sind, bereits auf einer Transportplattform 5.3 der dritten Art abgelegt werden, welche über eine zweite Abgabeeinrichtung 8.2 zum lateralen Ausgeben verfügt. Gemäß der in Fig. 1 gezeigten Ausführungsvariante ist die erste Abgabeeinrichtung 8.1 zum vertikalen Abgeben als Fallklappe ausgebildet und die zweite Abgabeeinrichtung 8.2 zum lateralen Abgeben als Schieber ausgebildet.

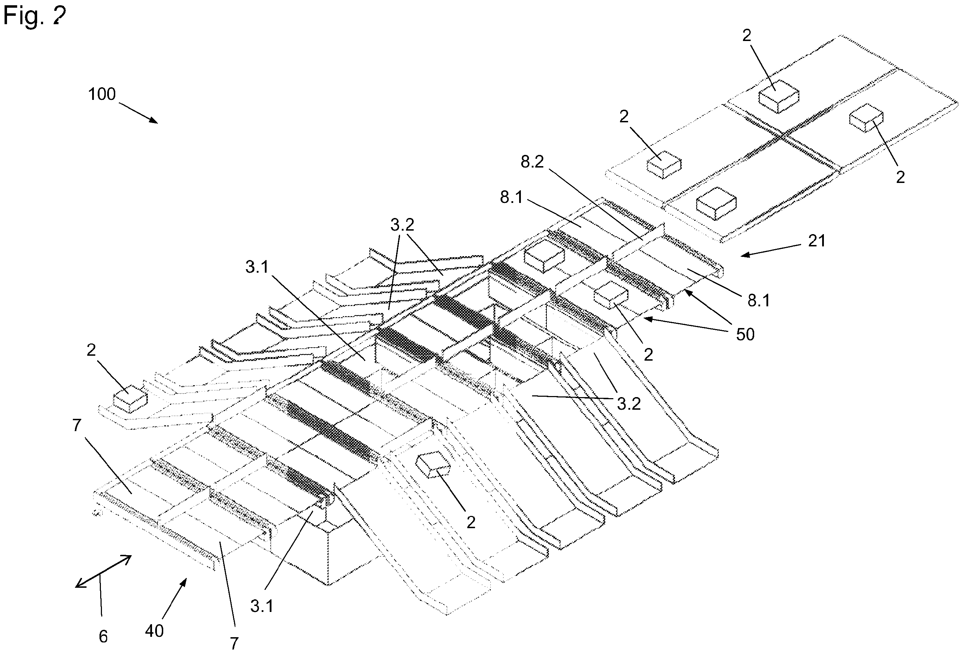

Fig. 2 zeigt eine weitere Ausführungsvariante der erfindungsgemäßen Sortiervorrichtung 100, wobei die Fördereinrichtung 40 als lineare Kette 21 von aneinander angrenzenden Transportplattformen 50 der ersten Art ausgebildet ist. Die lineare Kette 21 wird dabei in der in Fig. 2 gezeigten Ausführungsvariante durch Vor- und Zurückbewegung entlang der Transportrichtung 6 bewegt, um die Artikel 2 zu den entsprechenden Abgabestellen 3.1, 3.2 zu transportieren.

In einer weiteren, in den Figuren nicht gezeigten Ausführungsvariante, kann die Fördereinrichtung 40 auch als geschlossene Kette ausgeführt sein, wobei die Transportplattformen 50 entlang einer Bahn in horizontaler und vertikaler Ebene geführt werden, so dass die Transportplattformen 50 vertikal über oder unter den Transportplattformen 50 in Gegenrichtung zur Transportrichtung 6 zurückgeführt werden.

Wie für die Ausführungsvariante in Fig. 1 gezeigt, sind die Transportplattformen 50 zum Transport und zum Abgeben der Artikel 2 an die ersten und zweiten Abgabestellen 3.1, 3.2 ausgebildet, wobei die Artikel 2 wiederum auf den Auflageflächen 7 der Transportplattformen 50 während des Transports zu den Abgabestellen 3.1, 3.2 aufliegen.

Die Transportplattformen 50 der ersten Art weisen zwei erste Abgabeeinrichtungen 8.1 zum vertikalen Abgeben der Artikel 2 an erste Abgabestellen 3.1, sowie eine zweite Abgabeeinrichtung 8.2 zum lateralen Abgeben der Artikel 2 an zweite Abgabestellen 3.2, auf. Auf den Transportplattformen 50 können Artikel 2 sowohl in einem ersten Auflagebereich 23.1 und in einem zweiten Auflagebereich 23.2 abgelegt werden. Die Artikel 2 aus den Auflagebereichen 23.1, 23.2 können dann unabhängig voneinander jeweils in eine erste Abgabestelle 3.1 vertikal oder in eine zweite Abgabestelle 3.2 lateral abgegeben werden.

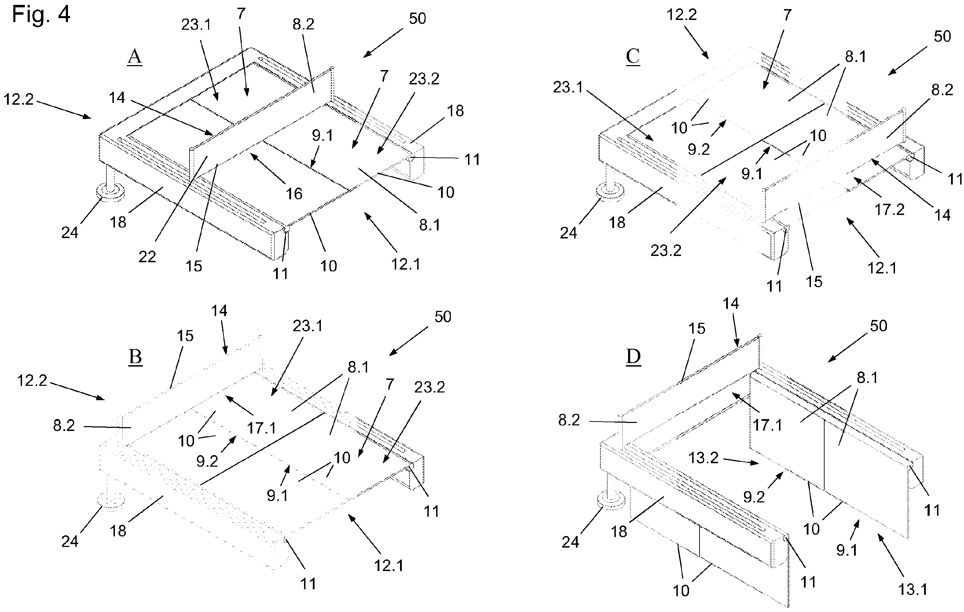

Fig. 4 zeigt eine schematische Detailansicht der Transportplattform 50 gemäß der Ausführungsvariante in Fig. 2 in vier verschiedenen Zuständen A, B, C und D.

Im Gegensatz zu den in den Fig. 1 und 3 gezeigten Transportplattformen 5.1, weist die Transportplattform 50 einen Schieber 14 mit einem Schiebelement 15 als zweite Abgabeeinrichtung 8.2 auf, wobei das Schiebelement 15 in seiner Ruheposition 16 einen Trennsteg 22 auf der Auflagefläche 7 ausbildet, welcher diese in den ersten und zweiten Auflagebereich 23.1, 23.2 auf jeweils einer Seite des Trennstegs 22 unterteilt. Somit können beiderseits des Trennstegs 22 jeweils in dem ersten und zweiten Auflagebereich 23.1, 23.2 Artikel 2 zum Transport aufliegen. Die Artikel 2 aus dem ersten und zweiten Auflagebereich 23.1, 23.2 können dann unabhängig voneinander durch Verlagerung des Schiebelements 15 in eine der Abschiebepositionen 17.1, 17.2 jeweils zu einer Seite der Transportplattform 50 lateral ausgeschoben werden, wie dies auch in der Fig. 2 dargestellt ist.

Die Zugmittel zum Antrieb des Schiebeelements 15 in gegenständlicher Ausführungsvariante sind im Gegensatz zu den Transportplattformen 5.1 in Fig. 2 unterhalb der Auflagefläche 7 an zwei gegenüberliegenden Rändern 18 der Transportplattform 50 angeordnet. Hierdurch ist eine flache, nicht durch die Ränder 18 begrenzte Auflagefläche 7 geschaffen, wodurch beispielsweise sehr große Artikel 2 über mehrere Transportplattformen 50 abgelegt werden können.

Zudem weist die Transportplattform 50 zwei voneinander unabhängige Fallklappen 9.1, 9.2 als erste Abgabeeinrichtungen 8.1 auf. Die beiden Fallklappen 9.1, 9.2 weisen jeweils zwei Klappen 10 auf, die wiederum um horizontale Achsen 11 drehbar sind. Damit können die Artikel 2 von dem ersten und zweiten Auflagebereich 23.1, 23.2 auch vertikal an die Abgabestellen 3.1 abgeworfen werden. Dazu können die Klappen 10 der Fallklappen 9.1, 9.2 unabhängig voneinander von geschlossenen Stellungen 12.1, 12.2 in geöffnete Stellungen 13.1, 13.2 verschwenkt werden.

Zustand A zeigt die Transportplattform 50 bereit zum Transport von Artikeln 2 auf beiden Seiten des Trennstegs 22 in den Auflagebereichen 23.1, 23.2.

Zustand B zeigt die Transportplattform 50, wobei der Schieber 14 in die erste Abschiebeposition 17.1 verschoben ist, um Artikel 2 von dem ersten Auflagebereich 23.1 an eine zweite Abgabestelle 3.2 lateral abzuschieben. Die Fallklappen 9.1, 9.2 sind jeweils in ihrer geschlossenen Stellung 12.1, 12.2.

Zustand C wiederum zeigt die Transportplattform 50, wobei der Schieber 14 in die zweite Abschiebeposition 17.2 verschoben ist, um Artikel 2 von dem zweiten Auflagebereich 23.2 an eine zweite Abgabestelle 3.2 lateral abzuschieben. Auch die Fallklappen 9.1, 9.2 sind wieder in ihren geschlossenen Stellungen 12.1, 12.2.

Zustand D zeigt schließlich die Transportplattform 50, wobei der Schieber 14 in seine erste Abschiebeposition 17.1 verschoben ist und beide Fallklappen 9.1, 9.2 in ihre geöffneten Stellungen 13.1, 13.2 verschwenkt sind, um Artikel 2 von dem ersten und zweiten Auflagebereich 23.1, 23.2 an erste Abgabestellen 3.1 vertikal abzuwerfen. Da die beiden Fallklappen 9.1 und 9.2 unabhängig voneinander geöffnet oder geschlossen sein können kann auch jeweils nur eine Fallklappe 9.1 oder 9.2 geöffnet und die jeweils andere Fallklappe 9.2 oder 9.1 geschlossen sein. In diesem Zustand ist es vorteilhaft, wenn der Schieber 14 in seiner mittigen Ruheposition positioniert ist, um zu verhindern, dass ein auf der geschlossenen Fallklappe 9.2 oder 9.1 abgelegter Artikel 2 seitlich verrutscht und ungeplant durch die geöffnete Fallklappe 9.1 oder 9.2 fällt.

Hinsichtlich der weiteren Ausgestaltung und Merkmale der Transportplattform 50 wird auf die obige Beschreibung zu der Transportplattform 5.1 gemäß Fig. 2 verwiesen.

In einer weiteren Ausführungsvariante kann die Transportplattform gemäß Fig. 3 oder 4 lediglich eine Klappe 10 aufweisen, was in den Figuren jedoch nicht näher gezeigt ist.

In wieder einer weiteren Ausführungsvariante kann eine Transportplattform gemäß Fig. 3 oder 4 auf der Auflagefläche ein Trennsteg aufweisen, welcher die Auflagefläche in einen ersten und zweiten Auflagebereich auf jeweils einer Seite des Trennstegs unterteilt, was in den Figuren nicht näher dargestellt wurde. Dabei kann etwa in jedem Auflagebereich ein Schieber, eine Fallklappe oder beides vorgesehen sein.

In noch einer weiteren Ausführungsvariante kann zuvor beschriebene Unterteilung der Auflagefläche in einen ersten und zweiten Auflagebereich auch ohne das Vorsehen eines Trennstegs erfolgen.

Das anhand von Fig. 1 dargestellte erfindungsgemäße Verfahren 200 kann auch gleichermaßen mittels einer Vorrichtung 100 gemäß Fig. 2 durchgeführt werden. Hierzu sei auf obige Ausführungen zu dem Verfahren 200 gemäß Fig. 1 verwiesen.

## Patentansprüche

1. Sortiervorrichtung zum Sortieren von Artikeln (2) an Abgabestellen (3.1, 3.2), wobei die Sortiervorrichtung (1, 100) eine Fördereinrichtung (4, 40) mit entlang einer Transportrichtung (6) bewegbaren Transportplattformen (5.1, 5.2, 5.3, 50) zum Transport der Artikel (2) und zum Abgeben der Artikel (2) an die Abgabestellen (3.1, 3.2) aufweist, wobei die Transportplattformen (5.1, 5.2, 5.3, 50) eine Auflagefläche (7) für die Artikel (2) aufweisen und wobei zumindest eine Transportplattform (5.1, 5.2, 50) eine erste Abgabeeinrichtung (8.1) zum vertikalen Abgeben der Artikel (2) von der Auflagefläche (7) an zumindest eine erste Abgabestelle (3.1) aufweist und zumindest eine Transportplattform (5.1, 5.3, 50) eine zweite Abgabeeinrichtung (8.2) zum lateralen Abgeben der Artikel (2) von der Auflagefläche (7) an zumindest eine zweite Abgabestelle (3.2) aufweist, **dadurch gekennzeichnet, dass** zumindest eine Transportplattform (5.1, 50) einer ersten Art zugleich die erste Abgabeeinrichtung (8.1) zum vertikalen Abgeben der Artikel (2) und die zweite Abgabeeinrichtung (8.2) zum lateralen Abgeben der Artikel (2) aufweist.

2. Sortiervorrichtung nach Anspruch 1, **dadurch gekennzeichnet, dass** die erste Abgabeeinrichtung (8.1) als Fallklappe (9, 9.1, 9.2) mit zumindest einer um eine horizontale Achse (11) drehbaren Klappe (10) zum vertikalen Abwerfen der Artikel (2) an die Abgabestelle (3.1) ausgebildet ist, wobei die zumindest eine Klappe (10) reversibel von einer geschlossenen Stellung (12, 12.1, 12.2) in eine geöffnete Stellung (13, 13.1, 13.2) verschwenkbar ist und in der geschlossenen Stellung (12, 12.1, 12.2) die Auflagefläche (7) der Transportplattform (5.1, 5.2, 50) ausbildet.

3. Sortiervorrichtung nach Anspruch 1 oder 2, **dadurch gekennzeichnet, dass** die zweite Abgabeeinrichtung (8.2) als Schieber (14) zum lateralen Abschieben der Artikel (2) an die zweite Abgabestelle (3.2) ausgebildet ist.

4. Sortiervorrichtung nach Anspruch 3, **dadurch gekennzeichnet, dass** der Schieber (14) ein Schiebeelement (15) aufweist, welches zwischen einer Ruheposition (16) und zumindest einer Abschiebeposition (17, 17.1, 17.2) entlang der Auflagefläche (7) quer zur Transportrichtung (6) verschiebbar ist.

5. Sortiervorrichtung nach Anspruch 4, **dadurch gekennzeichnet, dass** das Schiebeelement (15) in seiner Ruheposition (16) einen Trennsteg (22) auf der Auflagefläche (7) ausbildet, welcher diese in einen ersten und zweiten Auflagebereich (23.1, 23.2) auf jeweils einer Seite des Trennstegs (22) unterteilt.

6. Sortiervorrichtung nach Anspruch 4 oder 5, **dadurch gekennzeichnet, dass** das Schiebeelement (15) zum Verschieben entlang der Auflagefläche (7) mit zumindest einem an einem Rand (18) der Transportplattform (5.1, 5.3, 50) vorgesehenen Zugmittel, insbesondere einem angetriebenen Riemen oder einer angetriebenen Kette, gekoppelt ist.

7. Sortiervorrichtung nach einem der Ansprüche 4 bis 6, **dadurch gekennzeichnet, dass** das Schiebeelement (15) zum Verschieben entlang der Auflagefläche (7) mit zwei an gegenüberliegenden Rändern (18) der Transportplattform (5.1, 5.3, 50) vorgesehenen und parallel angetriebenen Zugmitteln, insbesondere einem Riemen oder einer Kette, gekoppelt ist.

8. Sortiervorrichtung nach Anspruch 4 oder 5, **dadurch gekennzeichnet, dass** das Schiebeelement (15) zum Verschieben entlang der Auflagefläche (7) mit zumindest einer an einem Rand (18) der Transportplattform (5.1, 5.3, 50) vorgesehenen Spindel gekoppelt ist.

9. Sortiervorrichtung nach einem der Ansprüche 1 bis 8, **dadurch gekennzeichnet, dass** zumindest eine Transportplattform (5.2) einer zweiten Art nur die erste Abgabeeinrichtung (8.1) zum vertikalen Abgeben der Artikel (2) aufweist und zumindest eine Transportplattform (5.3) einer dritten Art nur die zweite Abgabeeinrichtung (8.2) zum lateralen Abgeben der Artikel (2) aufweist.

10. Sortiervorrichtung nach einem der Ansprüche 1 bis 9, **dadurch gekennzeichnet, dass** die Fördereinrichtung (4, 40) eine geschlossene Kette (19, 21) aneinander angrenzender Transportplattformen (5.1, 5.2, 5.3, 50) aufweist, welche insbesondere entlang einer im Wesentlichen kreisförmigen Bahn (20) geführt werden.

11. Verfahren zum Sortieren von Artikeln (2) an jeweils bestimmte Abgabestellen (3.1, 3.2) mit einer Sortiervorrichtung (1, 100) gemäß einem der Ansprüche 1 bis 10, bei dem die Artikel (2) auf den Transportplattformen (5.1, 5.2, 5.3, 50) der Fördereinrichtung (4, 40) der Sortiervorrichtung (1, 100) abgelegt werden, die Artikel (2) auf den Transportplattformen (5.1, 5.2, 5.3, 50) zu den Abgabestellen (3.1, 3.2) transportiert werden und die Artikel (2) von den Transportplattformen (5.1, 5.2, 5.3, 50) jeweils an die Abgabestellen (3.1, 3.2) abgegeben werden, **dadurch gekennzeichnet, dass** den Artikeln (2) zumindest ein sie kennzeichnender Parameter zugeordnet wird und die Artikel (2) jeweils in Abhängigkeit des Parameters wahlweise lateral oder vertikal an die jeweilige Abgabestelle (3.1, 3.2) abgegeben werden.

12. Verfahren nach Anspruch 11, **dadurch gekennzeichnet, dass** die Artikel (2) auf Transportplattformen (5.1, 50) einer ersten Art zum wahlweise lateralen oder vertikalen Abgeben von der jeweiligen Transportplattform (5.1, 50) an die jeweilige Abgabestelle (3.1, 3.2) abgelegt werden.

13. Verfahren nach Anspruch 11, **dadurch gekennzeichnet, dass** die Artikel (2) jeweils in Abhängigkeit des Parameters auf Transportplattformen (5.2) einer zweiten Art zum vertikalen Abgeben oder auf Transportplattformen (5.3) einer dritten Art zum lateralen Abgeben der Artikel (2) an die jeweilige Abgabestelle (3.1, 3.2) abgelegt werden.

14. Verfahren nach einem der Ansprüche 11 bis 13, **dadurch gekennzeichnet, dass** der Artikel (2) lateral durch Ausschieben mittels eines Schiebers (14) oder vertikal durch Abwerfen durch eine Fallklappe (9, 9.1, 9.2) von den Transportplattformen (5.1, 5.2, 5.3, 50) an die jeweilige Abgabestelle (3.1, 3.2) abgegeben werden.

15. Verfahren nach einem der Ansprüche 11 bis 14, **dadurch gekennzeichnet, dass** der zumindest eine den jeweiligen Artikeln (2) zugeordnete Parameter ausgewählt ist aus der Gruppe enthaltend: die Zerbrechlichkeit, die Größe, die Form und das Gewicht des Artikels (2).

## Claims

1. A sorting device for sorting articles (2) at delivery points (3.1, 3.2), the sorting device (1, 100) having a conveying device (4, 40) comprising transport platforms (5.1, 5.2, 5.3, 50) that are movable along a transport direction (6) for transporting the articles (2) and for delivering the articles (2) to the delivery points (3.1, 3.2), with the transport platforms (5.1, 5.2, 5.3, 50) having a bearing surface (7) for the articles (2) and with at least one transport platform (5.1, 5.2, 50) having a first delivery device (8.1) for vertically delivering the articles (2) from the bearing surface (7) to at least one first delivery point (3.1) and at least one transport platform (5.1, 5.3, 50) having a second delivery device (8.2) for laterally delivering the articles (2) from the bearing surface (7) to at least one second delivery point (3.2), **characterized in that** at least one transport platform (5.1, 50) of a first type has, at the same time, the first delivery device (8.1) for vertically delivering the articles (2) and the second delivery device (8.2) for laterally delivering the articles (2).

2. A sorting device according to claim 1, **characterized in that** the first delivery device (8.1) is designed as a drop flap (9, 9.1, 9.2) with at least one flap (10) that can be rotated about a horizontal axis (11) for vertically ejecting the articles (2) to the delivery point (3.1), wherein the at least one flap (10) is pivotable reversibly from a closed position (12, 12.1, 12.2) into an open position (13, 13.1, 13.2) and, in the closed position (12, 12.1, 12.2), forms the bearing surface (7) of the transport platform (5.1, 5.2, 50).

3. A sorting device according to claim 1 or 2, **characterized in that** the second delivery device (8.2) is designed as a slider (14) for laterally expelling the articles (2) to the second delivery point (3.2).

4. A sorting device according to claim 3, **characterized in that** the slider (14) has a sliding element (15) which is displaceable between a rest position (16) and at least one expulsion position (17, 17.1, 17.2) along the bearing surface (7) transversely to the transport direction (6).

5. A sorting device according to claim 4, **characterized in that** the sliding element (15) in its rest position (16) forms a separating web (22) on the bearing surface (7), which separating web divides said bearing surface into a first and a second bearing area (23.1, 23.2) on each side of the separating web (22).

6. A sorting device according to claim 4 or 5, **characterized in that** the sliding element (15) is coupled to at least one traction means, in particular a driven belt or a driven chain, provided at an edge (18) of the transport platform (5.1, 5.3, 50) for displacement along the bearing surface (7).

7. A sorting device according to any of claims 4 to 6, **characterized in that** the sliding element (15) is coupled to two traction means, in particular a belt or a chain, provided at opposite edges (18) of the transport platform (5.1, 5.3, 50) and driven in parallel for displacement along the bearing surface (7).

8. A sorting device according to claim 4 or 5, **characterized in that** the sliding element (15) is coupled to at least one spindle provided at an edge (18) of the transport platform (5.1, 5.3, 50) for displacement along the bearing surface (7).

9. A sorting device according to any of claims 1 to 8, **characterized in that** at least one transport platform (5. 2) of a second type has only the first delivery device (8.1) for vertically delivering the articles (2) and at least one transport platform (5.3) of a third type has only the second delivery device (8.2) for laterally delivering the articles (2).

10. A sorting device according to any of claims 1 to 9, **characterized in that** the conveying device (4, 40) has a closed chain (19, 21) of transport platforms (5.1, 5.2, 5.3, 50) which are adjacent to one another and are guided in particular along an essentially circular path (20).

11. A method of sorting articles (2) at specific respective delivery points (3.1, 3.2) with a sorting device (1, 100) according to any of claims 1 to 10, wherein the articles (2) are placed on the transport platforms (5.1, 5.2, 5.3, 50) of the conveying device (4, 40) of the sorting device (1, 100), the articles (2) are transported on the transport platforms (5.1, 5.2, 5.3, 50) to the delivery points (3.1, 3.2) and the articles (2) are delivered from the transport platforms (5.1, 5.2, 5.3, 50) to the respective delivery points (3.1, 3.2), **characterized in that** the articles (2) are assigned at least one parameter characterizing them and the articles (2) are delivered to the respective delivery point (3.1, 3.2) optionally laterally or vertically in each case depending on the parameter.

12. A method according to claim 11, **characterized in that** the articles (2) are placed on transport platforms (5.1, 50) of a first type for an optionally lateral or vertical delivery from the respective transport platform (5.1, 50) to the respective delivery point (3.1, 3.2).

13. A method according to claim 11, **characterized in that** the articles (2) are placed on transport platforms (5.2) of a second type for vertical delivery or on transport platforms (5.3) of a third type for laterally delivering the articles (2) to the respective delivery point (3.1, 3.2), in each case depending on the parameter.

14. A method according to any of claims 11 to 13, **characterized in that** the article (2) is delivered from the transport platforms (5.1, 5.2, 5.3, 50) to the respective delivery point (3.1, 3.2) either laterally by being pushed out by means of a slider (14) or vertically by being dropped through a drop flap (9, 9.1, 9.2).

15. A method according to any of claims 11 to 14, **characterized in that** the at least one parameter associated to the respective articles (2) is selected from the group comprising: the fragility, the size, the shape and the weight of the article (2).

## Revendications

1. Dispositif de tri pour trier des articles (2) sur des emplacements de distribution (3.1, 3.2), lequel dispositif de tri (1, 100) comporte un système de convoyage (4, 40) avec des plateformes de transport (5.1, 5.2, 5.3, 50) pouvant se déplacer le long d'une direction de transport (6) pour transporter les articles (2) et pour distribuer les articles (2) sur les emplacements de distribution (3.1, 3.2), lesquelles plateformes de transport (5.1, 5.2, 5.3, 50) comportent une surface de support (7) pour les articles (2), au moins une plateforme de transport (5.1, 5.2, 50) comportant un premier système de distribution (8.1) pour la distribution verticale des articles (2) de la surface de support (7) à au moins un premier emplacement de distribution (3.1) et au moins une plateforme de transport (5.1, 5.3, 50) comportant un deuxième système de distribution (8.2) pour la distribution latérale des articles (2) de la surface de support (7) sur au moins un deuxième emplacement de distribution (3.2), **caractérisé en ce qu'**au moins une plateforme de transport (5.1, 50) d'un premier type comporte à la fois le premier système de distribution (8.1) pour la distribution verticale des articles (2) et le deuxième système de distribution (8.2) pour la distribution latérale des articles (2).

2. Dispositif de tri selon la revendication 1, **caractérisé en ce que** le premier système de distribution (8.1) est configuré comme une trappe (9, 9.1, 9.2) avec au moins un volet (10) pivotant autour d'un axe horizontal (11) pour larguer verticalement les articles (2) sur l'emplacement de distribution (3.1), lequel au moins un volet (10) peut pivoter de façon réversible d'une position fermée (12, 12.1, 12.2) à une position ouverte (13, 13.1, 13.2) et constitue, dans la position fermée (12, 12.1, 12.2), la surface de support (7) de la plateforme de transport (5.1, 5.2, 50).

3. Dispositif de tri selon la revendication 1 ou 2, **caractérisé en ce que** le deuxième système de distribution (8.2) est configuré comme une glissière (14) pour expulser latéralement les articles (2) sur le deuxième emplacement de distribution (3.2).

4. Dispositif de tri selon la revendication 3, **caractérisé en ce que** la glissière (14) comporte un élément coulissant (15) qui peut coulisser entre une position de repos (16) et au moins une position d'expulsion (17, 17.1, 17.2) le long de la surface de support (7) perpendiculairement à la direction de transport (6).

5. Dispositif de tri selon la revendication 4, **caractérisé en ce que** l'élément coulissant (15) constitue, dans sa position de repos (16), une cloison de séparation (22) sur la surface de support (7) qui divise celle-ci en une première et une deuxième zone de support (23.1, 23.2) de part et d'autre de la cloison de séparation (22).

6. Dispositif de tri selon la revendication 4 ou 5, **caractérisé en ce que**, pour coulisser le long de la surface de support (7), l'élément coulissant (15) est accouplé avec au moins un moyen de traction prévu sur un bord (18) de la plateforme de transport (5.1, 5.3, 50), en particulier une courroie entraînée ou une chaîne entraînée.

7. Dispositif de tri selon une des revendications 4 à 6, **caractérisé en ce que**, pour coulisser le long de la surface de support (7), l'élément coulissant (15) est accouplé avec deux moyens de traction prévus sur des bords (18) opposés de la plateforme de transport (5.1, 5.3, 50) et entraînés parallèlement, en particulier une courroie ou une chaîne.

8. Dispositif de tri selon la revendication 4 ou 5, **caractérisé en ce que**, pour coulisser le long de la surface de support (7), l'élément coulissant (15) est accouplé avec au moins une tige prévue sur un bord (18) de la plateforme de transport (5.1, 5.3, 50).

9. Dispositif de tri selon une des revendications 1 à 8, **caractérisé en ce qu'**au moins une plateforme de transport (5.2) d'un deuxième type comporte uniquement le premier système de distribution (8.1) pour la distribution verticale des articles (2) et au moins une plateforme de transport (5.3) d'un troisième type comporte uniquement le deuxième système de distribution (8.2) pour la distribution latérale des articles (2).

10. Dispositif de tri selon une des revendications 1 à 9, **caractérisé en ce que** le système de convoyage (4, 40) comporte une chaîne fermée (19, 21) de plateformes de transport (5.1, 5.2, 5.3, 50) attenantes entre elles qui sont en particulier guidées le long d'une piste (20) sensiblement circulaire.

11. Procédé pour trier des articles (2) sur des emplacements de distribution (3.1, 3.2) déterminés avec un dispositif de tri (1, 100) selon une des revendications 1 à 10, selon lequel les articles (2) sont déposés sur les plateformes de transport (5.1, 5.2, 5.3, 50) du système de convoyage (4, 40) du dispositif de tri (1, 100), les articles (2) sur les plateformes de transport (5.1, 5.2, 5.3, 50) sont transportés jusqu'aux emplacements de distribution (3.1, 3.2) et les articles (2) sur les plateformes de transport (5.1, 5.2, 5.3, 50) sont distribués chacun sur les emplacements de distribution (3.1, 3.2), **caractérisé en ce qu'**au moins un paramètre les caractérisant est associé aux articles (2) et les articles (2) sont distribués chacun, en fonction du paramètre, au choix latéralement ou verticalement sur l'emplacement de distribution (3.1, 3.2) correspondant.

12. Procédé selon la revendication 11, **caractérisé en ce que** les articles (2) sur des plateformes de transport (5.1, 50) d'un premier type pour la distribution au choix latérale ou verticale sont distribués par la plateforme de transport (5.1, 50) correspondante sur l'emplacement de distribution (3.1, 3.2) correspondant.

13. Procédé selon la revendication 11, **caractérisé en ce que** les articles (2) sont distribués chacun en fonction du paramètre sur des plateformes de transport (5.2) d'un deuxième type pour la distribution verticale ou sur des plateformes de transport (5.3) d'un troisième type pour la distribution latérale des articles (2) sur l'emplacement de distribution (3.1, 3.2) correspondant.

14. Procédé selon une des revendications 11 à 13, **caractérisé en ce que** l'article (2) sont distribués latéralement par expulsion au moyen d'une glissière (14) ou verticalement par largage à travers une trappe (9, 9.1, 9.2) par les plateformes de transport (5.1, 5.2, 5.3, 50) sur l'emplacement de distribution (3.1, 3.2) correspondant.

15. Procédé selon une des revendications 11 à 14, **caractérisé en ce que** l'au moins un paramètre associé aux différents articles (2) est sélectionné parmi le groupe comprenant la fragilité, la taille, la forme et le poids de l'article (2).
